(19) Europäisches Patentamt
European Patent Office
Office européen des brevets

(11) Numéro de publication : **0 057 479**
**B1**

(12) # FASCICULE DE BREVET EUROPÉEN

(45) Date de publication du fascicule du brevet : **26.09.84**

(51) Int. Cl.³ : **C 08 F 8/42**, C 08 C 19/36, C 08 G 85/00

(21) Numéro de dépôt : **82200055.0**

(22) Date de dépôt : **18.01.82**

(54) **Produits contenant des chaînes polymères, leur préparation et leur utilisation.**

(30) Priorité : **02.02.81 LU 83106**

(43) Date de publication de la demande : **11.08.82 Bulletin 82/32**

(45) Mention de la délivrance du brevet : **26.09.84 Bulletin 84/39**

(84) Etats contractants désignés : **AT BE CH DE FR GB IT LI NL SE**

(56) Documents cités :
**BE-A- 707 365**
**DE-B- 1 195 052**
**FR-A- 1 521 899**
**FR-A- 2 285 404**
**US-A- 4 005 247**

(73) Titulaire : **UNIBRA SOCIETE ANONYME**
**Boîte 6 40 Avenue des Arts**
**B-1040 Bruxelles (BE)**

(72) Inventeur : **Teyssie, Philippe**
**Bois Impérial du Rognac 85**
**B-4121 Neuville en Condroz (BE)**
Inventeur : **Jerome, Robert**
**Rue des Sorbiers 6**
**B-4040 Tilff-Esneux (BE)**
Inventeur : **Broze, Guy**
**Rue Claskin 32**
**B-4330 Grace-Hollogne (BE)**

(74) Mandataire : **De Brabanter, Maurice et al**
**Bureau VANDER HAEGHEN 63 Avenue de la Toison d'Or**
**B-1060 Bruxelles (BE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 057 479 B1

**Description**

La présente invention est relative à un procédé de préparation de produits contenant des chaînes polymères, dans lequel on fait réagir un prépolymère ou polymère linéaire contenant au moins un groupement acide libre à chaque extrémité de chaîne avec un alcoolate d'un métal.

Le brevet américain n° 4 005 247 décrit des compositions adhésives sensibles à la pression contenant un polymère adhésif obtenu par réaction d'un copolymère ou interpolymère contenant au moins 0,2 % en poids d'un anhydride d'un acide α,β-insaturé, tel que l'anhydride maléique, avec un alcoolate, de préférence chélaté, d'un métal choisi parmi ceux des groupes II, III, IV et V du Système Périodique. Cette réaction s'opère en l'absence d'eau, car l'eau hydrolyse et désactive l'alcoolate. Dans ce procédé, l'alcoolate métallique réagit avec l'anhydride d'acide sans intervention d'eau.

Le procédé décrit dans ledit brevet américain 4 005 247 ne fait pas appel à l'utilisation de polymères linéaires contenant au moins un groupement acide libre à chaque extrémité de chaîne et ne prévoit pas la réaction d'un alcoolate d'un métal avec de tels polymères en présence d'humidité.

Le brevet français n° 2 285 404 décrit un procédé de préparation d'un polymère élastomère vulcanisable par l'humidité, dans lequel on fait réagir un polymère contenant des sites d'insaturation oléfinique conjuguée répartis au hasard, tel qu'un caoutchouc à double liaison conjuguée, dans des conditions anhydres, avec un anhydride cyclique insaturé, tel que l'anhydride maléique, et on mélange ensuite le produit de la réaction avec un oxyde, hydroxyde ou alcoolate d'un métal polyvalent, tel l'oxyde ou l'hydroxyde de zinc.

Dans ce brevet français, il est spécifié que l'on utilise de l'eau pour hydrolyser les groupes anhydride du produit de réaction en groupes acide et/ou pour hydrolyser l'oxyde d'un métal polyvalent, lorsqu'un tel oxyde est utilisé, en présence d'un catalyseur d'hydrolyse.

Lorsqu'on fait usage d'un alcoolate au lieu d'un oxyde de métal polyvalent, cet alcoolate réagit directement avec les groupes anhydrides comme indiqué dans le brevet américain précité n° 4 005 247, sans que ces groupes doivent être préalablement hydrolysés et sans que l'alcoolate soit évidemment lui-même désactivé par hydrolyse, en sorte que le procédé décrit dans le brevet français n° 2 285 404 ne nécessite pas d'eau pour la réaction de réticulation par un alcoolate d'un métal, la proportion de cet alcoolate par rapport aux groupes anhydride n'étant d'ailleurs pas précisée dans ledit brevet français.

Dans le procédé selon le brevet français n° 2 285 404, le greffage d'un anhydride cyclique insaturé sur les sites d'insaturation oléfinique conjuguée répartis au hasard d'un polymère ne peut pas donner naissance à des produits comportant des groupements acides libres situés exclusivement en bout de chaîne.

Le procédé décrit dans le brevet français n° 2 285 404 ne prévoit pas l'utilisation de polymères linéaires portant des groupements acides libres en bout de chaîne, ni l'emploi d'alcoolates de métaux (M) en une quantité telle que les fonctions alcoolate soient en excès par rapport à la quantité stœchiométrique requise pour la réaction avec lesdits groupements acides, cette réaction étant suivie de l'action d'humidité pour hydrolyser les fonctions alcoolate excédentaires avec formation de liaisons M—O—M.

Or, on a constaté à présent que l'on peut obtenir des produits homogènes possédant des propriétés remarquables et présentant des taux de conversion voisins de 100 %, à condition de faire réagir sur un prépolymère ou polymère linéaire contenant au moins un groupement acide libre à chaque extrémité de chaîne avec un alcoolate d'un métal (M) ayant une valence supérieure à 2 en une quantité telle que les fonctions alcoolate soient en excès par rapport aux fonctions acides présentes dans le prépolymère ou le polymère et à condition d'agiter le mélange réactionnel au contact d'humidité, telle que de l'eau sous forme liquide, l'humidité atmosphérique ou toute autre source d'humidité, par exemple de l'alumine hydratée.

La présente invention concerne donc un procédé de préparation d'un produit de réaction d'un prépolymère ou polymère linéaire contenant au moins un groupement acide libre à chaque extrémité de chaîne, éventuellement dissous dans un solvant non polaire, avec un alcoolate d'un métal, ce procédé étant essentiellement caractérisé en ce qu'on utilise un alcoolate d'un métal (M) ayant une valence supérieure à 2, en une quantité telle que les fonctions alcoolate soient en excès par rapport à la quantité stœchiométrique des fonctions acides portées par ledit prépolymère ou polymère et en ce qu'on agite le mélange réactionnel en présence d'humidité jusqu'à obtention d'un produit dans lequel les atomes d'hydrogène des groupements acides terminaux du prépolymère ou polymère sont substitués par un atome du métal (M) lui-même lié à un autre atome de ce métal par des liaisons M—O—M.

Dans le procédé suivant l'invention, l'utilisation d'un alcoolate d'un métal à valence supérieure à 2 en excès, suivie de l'action d'humidité permet à cette dernière d'hydrolyser partiellement les fonctions alcoolate excédentaires M—OR après leur fixation sur le polymère pour former des fonctions M—OH, ces dernières réagissant avec les fonctions M—OR restantes pour former les liaisons M—O—M assurant la réticulation du système.

Lorsque la réaction entre le prépolymère ou polymère à groupements acides libres terminaux et l'alcoolate du métal à valence supérieure à 2 s'effectue en l'absence d'un solvant non polaire, c'est-à-dire en masse, on obtient des produits homogènes, dans lesquels l'atome d'hydrogène des groupements acides est substitué par un atome du métal (M) lui-même lié à un autre atome de ce métal par des liaisons M—O—M.

La réaction entre le prépolymère ou polymère à groupements acides libres terminaux et l'alcoolate du métal à valence supérieure à 2 peut également s'effectuer en présence d'un solvant non polaire dudit prépolymère ou polymère. Dans ces cas, on obtient des gels homogènes du produit de réaction, dans lequel l'atome d'hydrogène des groupements acides terminaux est substitué par un atome du métal (M) lui-même lié à un autre atome de ce métal par des liaisons M—O—M.

Comme source d'humidité, on peut utiliser, dans le cadre de l'invention, une masse d'eau, l'humidité atmosphérique ou toute autre source d'humidité, par exemple de l'alumine hydratée.

Le procédé suivant l'invention implique donc une réaction entre l'eau et les groupes OR de l'alcoolate du métal polyvalent M—OR en excès, cet alcoolate pouvant éventuellement être utilisé en solution dans un solvant polaire.

On a constaté qu'en opérant conformément à la présente invention, on peut conduire la réaction précitée à un degré d'avancement maximum et conférer au produit obtenu un maximum de cohésion à l'état pur.

Lorsque le procédé suivant l'invention est mis en œuvre en présence d'un solvant non polaire, il permet l'obtention de gels homogènes, très résistants et thermoréversibles dans les solvants non polaires. De plus, ces gels sont stables vis-à-vis de l'eau, de telle sorte qu'il est possible non seulement de les synthétiser, mais encore de les mettre en œuvre dans des conditions d'humidité non contrôlée.

Comme prépolymères ou polymères à groupements acides libres terminaux, on peut utiliser une gamme très large de polymères diacides, tels que les polymères polydiéniques, polyoléfiniques, polyvinyliques, polyoxydes d'alkylènes, polyacryliques et polysiloxanne à groupes acides libres terminaux.

Comme groupements acides peuvent être utilisés les groupements carboxyliques, sulfoniques ou phosphoniques.

Comme exemples particuliers de polymères utilisables dans le procédé suivant l'invention, on peut citer les polybutadiènes α,ω-diacides carboxyliques, les polyisoprènes α,ω-diacides carboxyliques, les poly α-méthylstyrènes α,ω-diacides carboxyliques, les poly tertiobutylstyrènes α,ω-diacides carboxyliques, les polystyrènes α,ω-diacides carboxyliques, les poly(oxydes d'éthylène) α,ω-diacides carboxyliques, les poly(oxydes de propylène) α,ω-diacides carboxyliques, les copolymères butadiène-acrylonitrile α,ω-diacides carboxyliques, les polyisobutylènes α,ω-diacides carboxyliques et les polyacrylates α,ω-diacides carboxyliques.

Quant aux solvants non polaires qui peuvent être éventuellement utilisés dans le procédé suivant l'invention, on peut citer les hydrocarbures aliphatiques, tels que le pentane, l'hexane, l'heptane ou l'octane, les hydrocarbures alicycliques, tels que le décahydronaphtalène et les solvants aromatiques tels que le benzène, le toluène, le tétrahydronaphtalène, l'essence pour véhicules automobiles, une huile minérale, etc., le solvant non polaire ayant de préférence une constante diélectrique inférieure à environ 5.

L'alcoolate du métal polyvalent peut être introduit à l'état pur ou bien en solution dans un solvant. L'excès d'alcoolate correspond à un nombre variable de métaux par chaîne diacide selon le métal considéré, cet excès étant avantageusement de plus de 1 à 5 métaux par chaîne diacide. Ce rapport est, de préférence, de 2,5 pour le titane et de 1,75 pour le zirconium.

Comme exemples particuliers de métaux polyvalents utilisables dans le procédé suivant l'invention sous forme d'alcoolates, on peut citer le titane, le zirconium et le cérium, mais d'autres métaux peuvent aussi être utilisés.

Les alcoolates de métaux utilisables dans le procédé suivant l'invention répondent à la formule générale :

$$M(—OR)\ n$$

dans laquelle M désigne un métal dont la valence n est supérieure à 2 et R désigne un groupe alkyle à chaîne droite ou ramifiée pouvant contenir 1 à 6 atomes de carbone.

L'invention concerne également, à titre de nouveaux matériaux, les produits formés par un prépolymère ou polymère linéaire contenant, à chaque extrémité de chaîne, au moins un groupement acide, dont l'atome d'hydrogène est substitué par un métal (M) à valence supérieure à 2, lui-même lié à un autre atome de ce métal (M) par des liaisons M—O—M. Les matériaux suivant l'invention sont préparés en l'absence de solvant ou en présence d'un solvant non polaire, ce dernier étant ultérieurement éliminé.

Lesdits matériaux suivant l'invention sont utilisables pour améliorer la résistance aux chocs de polymères, tels que le chlorure de polyvinyle et/ou pour développer des formulations adhésives.

L'invention couvre également, à titre de nouveaux matériaux, les gels homogènes et thermoréversibles formés, dans un solvant non polaire, par un prépolymère ou polymère linéaire contenant, à chaque extrémité de chaîne, au moins un groupement acide, dont l'atome d'hydrogène est substitué par un métal (M) à valence supérieure à 2, lui-même lié à un atome de ce métal par des liaisons M—O—M.

Comme produits suivant l'invention, par exemple sous forme de gels, on peut citer en particulier les produits formés de ou contenant les polymères suivants :

Polybutadiène α,ω-dicarboxylate, poly α-méthylstyrène α,ω-dicarboxylate, poly tertiobutylstyrène α,ω-dicarboxylate, polystyrène α,ω-dicarboxylate, poly(oxyde d'éthylène) α,ω-dicarboxylate, poly(oxyde

de propylène) α,ω-dicarboxylate, copolymères butadiène-acrylonitrile α,ω-dicarboxylate, polyacrylate α,ω-dicarboxylate et polyisobutylène α,ω-dicarboxylate de titane, de zirconium, de cérium ou d'un autre métal à valence supérieure à 2, éventuellement dans un solvant non polaire.

Les produits sous forme de gels précités sont utilisables comme agents épaississants d'huiles et lubrifiants divers.

L'invention couvre également la formation des gels précités sur une nappe de pétrole (solvant non polaire) flottant sur de l'eau, telle que de l'eau de mer. Dans cette forme particulière de mise en œuvre du procédé suivant l'invention, ce procédé permet l'enlèvement par écrémage du gel formé en laissant la masse d'eau pratiquement exempte de pétrole. L'intérêt de cette forme de réalisation du procédé suivant l'invention est manifeste, lorsqu'il s'agit de lutter contre la pollution créée par la formation accidentelle de nappes de pétrole à la surface des mers et océans.

L'invention concerne enfin l'utilisation des gels suivant l'invention, après élimination partielle ou totale du solvant, pour l'amélioration de la résistance aux chocs de polymères, tels que le chlorure de polyvinyle et/ou pour développer des formulations adhésives.

Les exemples suivants illustrent l'invention.

## Exemple 1

Préparation de polybutadiène α,ω-dicarboxylate de titane

Dans un vase de berlin de 500 ml, 10 g de polybutadiène α,ω-diacide carboxylique ($2{,}17 \cdot 10^{-3}$ moles) (Hycar CTB de Goodrich, $\bar{M}n = 4\,600$) sont dissous dans 200 ml de toluène pur (Baker).

On introduit alors 1,9 ml de n-butanolate de titane ($5{,}43 \cdot 10^{-3}$ moles) ($Ti(OBu)_4$, Fluka), et on agite vigoureusement la solution au moyen d'une spatule. On constate que la viscosité du milieu augmente, jusqu'à conduire à un gel homogène.

La vitesse de prise en gel est d'autant plus rapide que l'agitation est puissante, c'est-à-dire que l'introduction de l'humidité atmosphérique dans le milieu est importante.

L'influence de cette humidité est illustrée par la figure 1 ci-jointe, où l'on a porté le logarithme de la viscosité (en ordonnée) en fonction de la quantité d'eau (en abscisse) introduite par ajoute dosée dans 50 ml de solution. La viscosité d'équilibre atteint 180 Pa.s (1 800 poises) et le produit prend alors l'aspect d'un gel.

La présence d'humidité est nécessaire à la gélification du milieu, par suite de la formation de liens Ti—O—Ti. Si, en effet, on opère dans des conditions anhydres, on observe une augmentation de la viscosité du milieu, mais aucune gélification ne se produit.

Le caractère rhéopectique du milieu réactionnel est illustré par la figure 2, où l'on a porté en fonction du temps en minutes (en abscisse) la viscosité (en ordonnée) du milieu initialement anhydre mis en contact avec l'humidité atmosphérique. Cette viscosité est déterminée au moyen d'un viscosimètre Haake à cylindres concentriques. Le gradient de vitesse de cisaillement est de 1 $sec^{-1}$.

Les caractéristiques rhéologiques du gel sont déterminées à 23 °C au moyen du spectromètre mécanique RHEOMETRICS, RMS 7 200, travaillant entre plateaux parallèles. L'évolution en fonction de la pulsation angulaire ω des modules de conservation G' et de pertes G" est illustrée à la figure 3. G' est quasi indépendant de ω, tandis que G" présente un minimum ; ce comportement est typique d'un système gélifié. Le module d'équilibre Géq, défini comme la valeur de G' au minimum de G", vaut 91 000 dynes/$cm^2$.

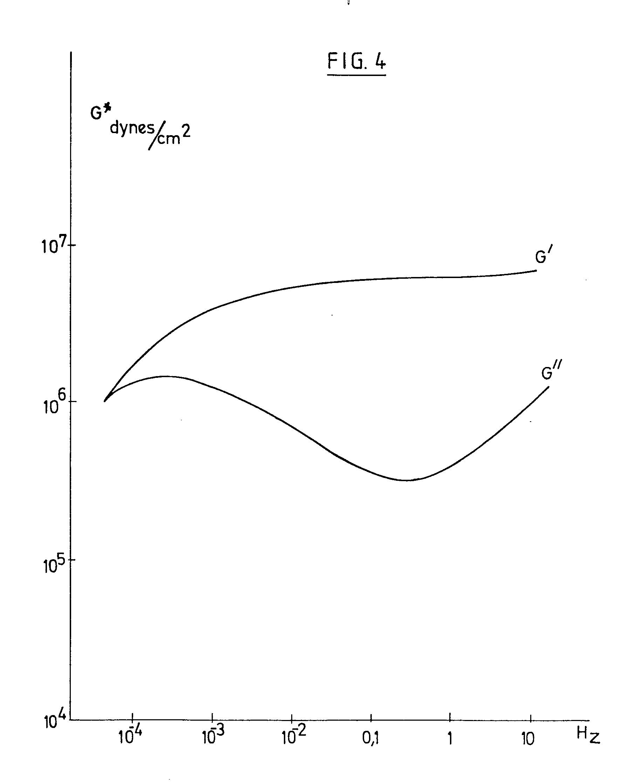

Après élimination du solvant sous vide, on obtient une substance d'apparence gommeuse dont les caractéristiques rhéologiques dynamiques ont été évaluées (figure 4). A la température de 23 °C et à la fréquence de 0,25 Hz, G' vaut $6{,}3 \cdot 10^6$ dynes/$cm^2$ et G" passe par un minimum à $0{,}32 \cdot 10^6$ dynes/$cm^2$. La fin du plateau caoutchoutique se situe à $5 \cdot 10^{-5}$ Hz. A la fréquence de 1 Hz, la fin du plateau caoutchoutique surviendrait à une température estimée à 226 °C (l'énergie d'activation est de $14{,}3 \pm 0{,}5$ Kcal/mole).

## Exemple 2

Préparation de polyisoprène α,ω-dicarboxylate de titane

On prépare d'abord un polyisoprène α,ω-diacide carboxylique de $\bar{M}n = 16\,000$ de la manière suivante :

a) Préparation du complexe naphtalène-sodium

Dans un ballon de 250 ml rigoureusement sec sont introduits, sous courant d'azote sec, 1 g de sodium fraîchement décapé et 1,28 g de naphtalène pur (Aldrich). 100 ml de tétrahydrofuranne séché par reflux sur complexe benzophénone-sodium sous atmosphère d'azote sec et distillé juste avant emploi sont ensuite ajoutés. Après 4 heures d'agitation à température ordinaire, le complexe naphtalène-sodium est formé ; sa concentration est de 0,1 mole/litre.

b) Préparation du polyisoprène α,ω-diacide carboxylique

Dans un ballon de 1 litre contenant 300 ml de tétrahydrofuranne sec (séchage comme ci-avant), on introduit, à température ordinaire et sous atmosphère d'azote sec, 62,5 ml de la solution du complexe naphtalène-sodium préparée en a) ($6{,}25 \cdot 10^{-3}$ moles).

On introduit alors 1,7 ml d'α-méthylstyrène (Aldrich) séché préalablement sur hydrure calcique (Fluka) et distillé sous vide. Le ballon est ensuite plongé dans un bain d'acétone saturée de carboglace (− 78 °C).

Après 30 minutes, 73 ml d'isoprène (Aldrich) (0,74 moles), séché sur hydrure calcique, sont ajoutés goutte à goutte en 15 minutes environ, et après un nouveau délai de 15 minutes, on introduit, au moyen d'un capillaire (section interne : 1 $mm^2$ au moins) plongeant dans la solution, un excès de $CO_2$ gazeux. La solution se décolore tout en gélifiant. Après l'introduction de 1 ml d'une solution aqueuse concentrée d'acide chlorhydrique, le polymère est précipité dans 5 litres de méthanol technique, filtré et séché sous vide.

La masse moléculaire du produit est de 16 000 (GPC) et la fonctionnalité déterminée par titrage des fonctions acides supérieure à 1,95 (groupes acides par chaîne).

c) Préparation du polyisoprène α,ω-dicarboxylate de titane (PIP-Ti)

10 g de polyisoprène α,ω-diacide carboxylique de $\bar{M}n$ = 16 000 ($0{,}63 \cdot 10^{-3}$ moles) préparé en b) sont dissous dans 100 ml de toluène. 0,53 ml de n-butanolate de titane (Fluka) ($1{,}57 \cdot 10^{-3}$ moles) sont ensuite ajoutés à la solution de polymère. On agite la solution vigoureusement au moyen d'une spatule, comme dans l'exemple 1. Après quelques minutes d'agitation, un gel homogène est obtenu. Le module d'équilibre mesuré à 25 °C s'élève à $8{,}2 \cdot 10^4$ dynes/$cm^2$.

Une synthèse identique réalisée au moyen d'un polyisoprène α,ω-diacide carboxylique de $\bar{M}n$ = 10 000 conduit à un gel dont le module d'équilibre vaut $10{,}8 \cdot 10^4$ dynes/$cm^2$.

Il apparaît que la masse moléculaire du PIP dans le domaine ici rapporté n'a pas une action déterminante sur le module d'équilibre des gels obtenus ; les modules sont de l'ordre de $10^5$ dynes/$cm^2$. Une augmentation de $\bar{M}n$ se traduit par une faible diminution de ce module.

Exemple 3

Préparation de polybutadiènes α,ω-dicarboxylates de titane

Dans des vases de berlin de 500 ml, 5 g ($1{,}1 \cdot 10^{-3}$ moles) de polybutadiène α,ω-diacide carboxylique (CTB Hycar de Goodrich, $\bar{M}n$ = 4 600) sont dissous dans des volumes variables de décahydronaphtalène pur (Décaline Baker), de manière à obtenir des concentrations en polymère allant de 1,5 à 24 g/dl.

A ces différentes solutions, on ajoute 1,0 ml de n-butanolate de titane ($2{,}94 \cdot 10^{-3}$ Moles) et on agite vigoureusement avec une spatule jusqu'à l'obtention d'un gel homogène. Celle-ci est d'autant plus rapide que la concentration en polymère est élevée.

Pour ces différents gels, le module de conservation à 1 Hz et à 23 °C est repris au tableau 1 suivant :

Tableau 1

| Concentration C (g/dl) | Log G' (1Hz, 23°C) |
|---|---|
| 1,5 | 2,60 |
| 2,2 | 3,45 |
| 4,0 | 4,25 |
| 5,0 | 4,44 |
| 10 | 5,10 |
| 17 | 5,49 |
| 24 | 5,69 |
| 91 | 6,82 |

De ces valeurs expérimentales, on peut déduire que si C est supérieur à 2, le module de conservation

à 1 Hz est donné par l'équation suivante :

$$G'(1\ Hz,\ 23\ °C) = 1\ 260\ C^{1,9}$$

avec G' exprimé en dynes/$cm^2$ et C en $g \cdot dl^{-1}$.

A la concentration de 1,2 g/dl, on n'obtient pas un gel, mais bien un liquide visqueux.

La concentration critique de gélification se situe donc entre 1,2 g/dl et 1,5 g/dl.

Exemple 4

Préparation de polystyrène α,ω-dicarboxylate de titane

a) Préparation d'un polystyrène α,ω-diacide carboxylique

On prépare tout d'abord un polystyrène α,ω-diacide carboxylique de $\bar{M}n = 10\ 000$ de la manière suivante :

Dans un ballon de 1 litre, préalablement séché et mis sous azote, sont introduits 300 ml de tétrahydrofuranne sec (séchage comme dans la partie a) de l'exemple 2), 100 ml de solution de naphtalène-sodium (préparée comme en a) dans l'exemple 2) ($10^{-2}$ moles), 2,7 ml d'α-méthylstyrène (Aldrich) séché préalablement sur l'hydrure calcique (Fluka) et distillé sous vide. Le ballon est alors plongé dans un bain d'acétone saturée de carboglace (– 78 °C). Après 30 minutes, 50 g de styrène (Aldrich) (0,48 mole) séché sur hydrure calcique puis distillé sous vide, sont ajoutés goutte à goutte en 15 minutes environ, et après un nouveau délai de 15 minutes, on introduit, au moyen d'un capillaire en acier inoxydable, plongeant dans la solution, un excès de $CO_2$ gazeux (comme dans la partie b) de l'exemple 2). La solution se décolore tout en gélifiant. Après l'introduction de 1 ml d'une solution aqueuse concentrée d'acide chlorhydrique, le polymère est précipité dans 5 litres de méthanol technique, filtré et séché sous vide.

La masse moléculaire de ce polymère est de 10 000 (GPC) et sa fonctionnalité > 1,95 (titrage).

b) Préparation de polystyrène α,ω-dicarboxylate de titane (PST-Ti)

10 g de polystyrène α,ω-diacide carboxylique de $\bar{M}n = 10\ 000$ ($10^{-3}$ moles) préparé comme décrit ci-dessus sont dissous dans 100 ml de toluène. 0,85 ml de n-butanolate de titane ($2,5 \cdot 10^{-3}$ moles) (Fluka) sont ensuite ajoutés à la solution de polymère. On agite cette solution vigoureusement au moyen d'une spatule, comme décrit dans l'exemple 1. Après quelques minutes d'agitation, un gel homogène est obtenu.

Exemple 5

Préparation de poly tertiobutylstyrène α,ω-dicarboxylate de titane

a) Préparation de poly tertiobutylstyrène α,ω-diacide carboxylique

On prépare tout d'abord un poly tertiobutylstyrène α,ω-diacide carboxylique de $\bar{M}n = 10\ 000$ de façon identique à celle décrite dans l'exemple 4 pour le polystyrène α,ω-diacide carboxylique, sauf que l'on remplace les 50 g de styrène par 50 g de tertiobutylstyrène, séché sur hydrure calcique (Fluka) puis distillé sous vide.

b) Préparation de poly tertiobutylstyrène α,ω-dicarboxylate de titane (PTBS-Ti)

10 g de poly tertiobutylstyrène α,ω-diacide carboxylique de $\bar{M}n = 10\ 000$ ($10^{-3}$ moles), préparé comme décrit ci-dessus, sont dissous dans 100 ml de toluène. 0,85 ml de n-butanolate de titane ($2,5 \cdot 10^{-3}$ moles) (Fluka) sont ensuite ajoutés à la solution de polymère. On agite la solution vigoureusement au moyen d'une spatule, comme décrit dans l'exemple 1. Après quelques minutes d'agitation, un gel homogène est obtenu.

Exemple 6

Préparation de poly α-méthylstyrène α,ω-dicarboxylate de titane (PMST-Ti)

a) Préparation d'un poly α-méthylstyrène α,ω-dicarboxylique

On prépare tout d'abord un poly α-méthylstyrène α,ω-diacide carboxylique de $\bar{M}n = 10\ 000$ de la manière suivante :

Dans un ballon de 1 litre préalablement séché et mis sous azote sec, on introduit 300 ml de

tétrahydrofuranne sec (séchage comme dans la partie a) de l'exemple 2), 100 ml de solution de naphtalènesodium préparée comme en a) dans l'exemple 2 ($10^{-2}$ moles) et 50 g d'α-méthylstyrène (0,42 Mole) (Aldrich) séché préalablement sur hydrure calcique (Fluka) et distillé sous vide. Le ballon est alors plongé dans un bain d'acétone à température ordinaire. Celui-ci est progressivement refroidi par addition de carboglace, jusqu'à atteindre une température de – 78 °C. Après 15 minutes de séjour à cette température, on introduit dans le ballon, au moyen d'un capillaire en acier inoxydable plongeant dans la solution, un excès de $CO_2$ gazeux. La solution rouge se décolore tout en gélifiant. Après l'introduction de 1 ml d'une solution aqueuse concentrée d'acide chlorhydrique, le polymère est précipité dans 5 litres de méthanol technique, filtré et séché sous vide.

b) Préparation de poly α-méthylstyrène α,ω-dicarboxylate de titane (PMST-Ti)

10 g de poly α-méthylstyrène α,ω-diacide carboxylique de $\bar{M}n$ = 10 000 ($10^{-3}$ moles), préparé comme décrit ci-dessus, sont dissous dans 100 ml de toluène. 0,85 ml de n-butanolate de titane (Fluka ($2{,}5 \cdot 10^{-3}$ moles) sont ensuite ajoutés à la solution de polymère. On agite vigoureusement la solution au moyen d'une spatule, comme décrit dans l'exemple 1. Après quelques minutes d'agitation, un gel homogène est obtenu. Géq vaut $7{,}4 \cdot 10^4$ dynes/cm$^2$.

Exemple 7

Préparation d'un copolymère statistique butadiène-acrylonitrile α,ω-dicarboxylate de titane

5 g ($1{,}4 \cdot 10^{-3}$ moles) de copolymère statistique butadiène-acrylonitrile α,ω-diacide carboxylique (Hycar CTBN 1 300 × 8 de BF Goodrich (Mn = 3 500 et teneur en acrylonitrile : 17 %) sont dissous dans 100 ml de toluène. 1,81 ml de n-butanolate de titane ($3{,}6 \cdot 10^{-3}$ moles) sont alors introduits.

La solution est vigoureusement agitée au moyen d'une spatule. Après quelques minutes, le milieu gélifie. Le module d'équilibre correspondant à ce gel vaut $6{,}9 \cdot 10^4$ dynes/cm$^2$.

Un comportement tout à fait identique est observé pour des copolymères statistiques contenant respectivement 10 % et 27 % d'acrylonitrile.

Exemple 8

Préparation de polybutadiène α,ω-dicarboxylate de zirconium

Dans un vase de berlin de 500 ml, 10 g ($2{,}17 \cdot 10^{-3}$ moles) de polybutadiène α,ω-diacide carboxylique (Hycar CTB de Goodrich, $\bar{M}n$ = 4 600) sont dissous dans 200 ml de toluène pur (Baker).

On introduit alors 2,43 ml ($5{,}43 \cdot 10^{-3}$ moles) de n-propanolate de zirconium ($Zr(OC_3H_7)_4 \cdot (C_3H_7{-}OH)_2$-Aldrich) et l'on agite vigoureusement la solution au moyen d'une spatule.

La viscosité du milieu augmente considérablement jusqu'à conduire à un gel homogène.

La vitesse de prise en gel est d'autant plus grande que l'agitation est puissante, c'est-à-dire que l'introduction de l'humidité atmosphérique est rapide. Le module d'équilibre du gel à 23 °C est de $1{,}6 \cdot 10^5$ dynes/cm$^2$.

En l'absence de toute humidité, aucune gélification ne se produit.

Exemple 9

Préparation de poly(oxyde d'éthylène) α,ω-dicarboxylate de zirconium (PEO-Zr)

a) Préparation de poly(oxyde d'éthylène) α,ω-diacide carboxylique

On prépare tout d'abord du poly(oxyde d'éthylène) α,ω-diacide carboxylique de la manière suivante :

20 g ($5 \cdot 10^{-3}$ moles) de poly(oxyde d'éthylène) α,ω-diol(polyglycol 4 000, Hoechst EAG, Mn = 4 000) sont dissous dans 200 ml de toluène. Cette solution est traitée par un excès d'anhydride succinique (2 g) (Aldrich) à reflux durant 16 heures. Le poly(oxyde d'éthylène) α,ω-diacide carboxylique formé est récupéré par précipitation de la solution dans 10 fois son volume d'hexane technique, suivie de filtration et séchage sous vide.

La fonctionnalité, déterminée par titrage de l'acide est supérieure à 1,95.

b) Préparation de poly(oxyde d'éthylène) α,ω-dicarboxylate de zirconium

5 g de poly(oxyde d'éthylène) α,ω-diacide carboxylique ($1{,}25 \cdot 10^{-3}$ moles) sont dissous dans 50 ml de toluène. On introduit alors 1,4 g ($3{,}13 \cdot 10^{-3}$ moles) de n-propanolate de Zr, puis on agite vigoureusement la solution. Cette dernière prend rapidement en gel, dont les caractéristiques mécaniques sont analogues à celles des gels préparés dans les exemples précédents. Cependant, après un vieillissement de 24 heures à température ordinaire et à l'air ambiant, le gel se détruit et on obtient une

solution visqueuse. Par contre, si l'on conserve le gel à l'abri de l'atmosphère, il garde ses propriétés mécaniques intactes.

Exemple 10

Préparation de poly(oxyde de propylène) α,ω-dicarboxylate de zirconium (PPO-Zr)

a) Préparation de poly(oxyde de propylène) α,ω-dicarboxylique

On prépare d'abord du poly(oxyde de propylène) α,ω-diacide carboxylique de la manière suivante : 20 g ($5 \cdot 10^{-3}$ moles) de poly(oxyde de propylène) α,ω-diol ($\bar{M}n$ = 4 000, Aldrich) sont dissous dans 200 ml de toluène. Cette solution est traitée par un excès d'anhydride succinique (2 g, Aldrich) à reflux durant 16 heures. Le poly(oxyde de propylène) α,ω-diacide carboxylique formé est isolé de la manière suivante : la solution toluénique est traitée par 3 · 100 ml d'une solution aqueuse de NaOH à 5 %, puis par 3 · 100 ml d'une solution aqueuse molaire de HCl, puis par 4 · 100 ml d'eau pure. Le toluène est alors évaporé sous pression réduite et le polymère recueilli présente une fonctionnalité en acide carboxylique de 1,9.

b) Préparation de poly(oxyde de propylène) α,ω-dicarboxylate de zirconium

5 g de poly(oxyde de propylène) α,ω-diacide carboxylique ($1,25 \cdot 10^{-3}$ moles) sont dissous dans 50 ml de toluène. On introduit alors 1,4 g ($3,13 \cdot 10^{-3}$ moles) de n-propanolate de Zr, puis on agite vigoureusement avec une spatule. Le milieu prend rapidement en gel. Ce gel a des propriétés mécaniques analogues à celles décrites dans les exemples précédents et contrairement au gel de poly(oxyde d'éthylène), il est stable dans le temps.

Exemple 11

Préparation de polyacrylate de n-butyle α,ω-dicarboxylate de zirconium

a) Préparation de polyacrylate de n-butyle α,ω-diacide carboxylique

On prépare tout d'abord un polyacrylate de n-butyle α,ω-diacide carboxylique de la manière suivante :

Sous azote, à 50 ml de méthanol portés à ébullition, on ajoute goutte à goutte un mélange constitué de 8 g d'acide diazocyanovalérique, 25 g d'acide dithiopropionique, 120 g d'acrylate de n-butyle fraîchement distillé et 400 ml de méthanol. On poursuit le chauffage pendant 30 minutes après l'addition complète du mélange. Le mélange réactionnel est porté à – 20 °C durant 24 heures ; le polymère formé s'insolubilise et est isolé par simple décantation.

La masse moléculaire moyenne en nombre est de 16 000, en supposant une fonctionnalité idéale de deux acides carboxyliques par chaîne.

b) Préparation de polyacrylate de n-butyle α,ω-dicarboxylate de zirconium (PBA-Zr)

10 g de polyacrylate de n-butyle α,ω-diacide carboxylique de $\bar{M}n$ = 16 000 ($6,25 \cdot 10^{-4}$ moles) préparé comme décrit ci-dessus sont dissous dans 50 ml de benzène. 0,56 g de n-propanolate de zirconium ($1,25 \cdot 10^{-3}$ moles, Fluka) sont ensuite ajoutés à la solution de polymère. On agite vigoureusement cette solution au moyen d'une spatule comme décrit dans l'exemple 1. Après quelques minutes d'agitation, un gel homogène est obtenu. Une fois le benzène éliminé sous vide, le module de conservation G' du produit (Rheometrics, RMS 7 200) varie peu avec la fréquence, à savoir de $1,5 \cdot 10^6$ dynes/cm$^2$ à 0,016 Hz, à $3,5 \cdot 10^6$ dynes/cm$^2$ à 16 Hz.

Exemple 12

Préparation de polybutadiène α,ω-dicarboxylate de titane-alumine

10 g ($2,17 \cdot 10^{-3}$ moles) de polybutadiène α,ω-diacide carboxylique (CTB Hycar de Goodrich, $\bar{M}n$ = 4 600) sont dissous dans 100 ml de toluène. On introduit alors 1,85 ml de n-butanolate de titane ($5,4 \cdot 10^{-3}$ moles) (Fluka). Cette solution est versée dans un mortier auquel on ajoute, par petites pincées et tout en broyant, 1 g d'alumine hydratée (Merck). Le milieu prend en gel au fur et à mesure de l'agitation par broyage. Après 5 minutes de broyage, un gel homogène est obtenu. Le module d'équilibre de ce gel, à 23 °C, est élevé puisqu'il atteint $3,2 \cdot 10^5$ dynes/cm$^2$.

Exemple 13

Préparation de polybutadiène α,ω-dicarboxylate de titane

10 g ($2,17 \cdot 10^{-3}$ moles) de polybutadiène α,ω-diacide carboxylique (CTB Hycar de Goodrich, $\bar{M}n = 4\,600$) sont dissous dans 200 ml d'essence super pour véhicules automobiles (B. P.). 1,85 ml de n-butanolate de titane (Fluka) ($5,4 \cdot 10^{-3}$ moles) sont ensuite ajoutés, et la solution est agitée vigoureusement au moyen d'une spatule, jusqu'à ce qu'un gel homogène soit obtenu, ce qui survient après environ 30 secondes d'agitation. Les caractéristiques mécaniques de ce gel sont identiques à celles du gel de l'exemple 1.

Si l'on prélève une portion de ce gel pour le déposer à la surface de l'eau, on constate qu'il flotte sans se décomposer. Après 48 heures, le gel n'est toujours pas détruit par l'humidité.

Les caractéristiques de combustion de ce gel sont assez remarquables. Si on enflamme une fraction de gel, celle-ci brûle lentement, et le foyer reste localisé. L'extinction se produit avant la combustion complète.

Exemple 14

Préparation de polybutadiène α,ω-dicarboxylate de titane (PBD-Ti)

Dans un cristallisoir de 20 cm de diamètre, on verse 1 litre d'eau alimentaire. Sur cette eau, on verse 200 ml d'essence super pour véhicule automobiles (B. P.). 10 g ($2,17 \cdot 10^{-3}$ moles) de PBD α,ω-diacide carboxylique (Hycar CTB de Goodrich, $\bar{M}n = 4\,600$) sont dissous dans l'essence. On ajoute alors 1,85 ml ($5,4 \cdot 10^{-3}$ moles) de n-butanolate de titane (Fluka) puis on agite vigoureusement le tout au moyen d'une spatule. Le phénomène de gélification s'opère et l'intégralité de l'essence se trouve incorporée dans ce gel. On peut ensuite écrémer le gel et restituer une eau pratiquement exempte d'hydrocarbure.

Exemple 15

Préparation de polybutadiène α,ω-dicarboxylate de cérium

On prépare tout d'abord le butanolate de cérium suivant :

$$Ce\ (O{-}CH_2{-}CH_2{-}CH_2{-}CH_2)_4 \cdot$$ 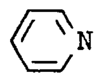

par la méthode décrite par D. C. Bradley, A. K. Chatterjee et W. Wardlaw (J. Chem. Soc., 2260, 1956).

A 12 g ($2,6 \cdot 10^{-3}$ moles) de polybutadiène α,ω-dicarboxylique (Hycar CTB de Goodrich, $\bar{M}n = 4\,600$), dissous dans 100 ml de toluène, on ajoute $6,5 \cdot 10^{-3}$ moles de butanolate de cérium et on agite la solution vigoureusement au moyen d'une spatule. Un gel est rapidement obtenu. Ses caractéristiques mécaniques sont très intéressantes puisque, à 23 °C et à la fréquence de 1 Hz, le module de conservation dépasse le million de dynes/cm² ($1,05 \cdot 10^{6}$ dynes/cm²).

Exemple 16

Préparation de polybutadiène α,ω-dicarboxylate de titane

On prépare au préalable des polybutadiènes α,ω-diacides carboxyliques de différentes masses moléculaires de la façon suivante :

Dans quatre ballons d'un litre A, B, C et D préalablement séchés, mis sous atmosphère d'azote, contenant chacun 300 ml de tétrahydrofuranne sec (séchage comme en a) dans l'exemple 2), on introduit x ml de la solution de naphtalène-sodium (préparée comme en a) dans l'exemple 2), puis on introduit y ml d'α-méthylstyrène (Aldrich) séché sur hydrure calcique (Fluka) et distillé sous vide. Les ballons sont alors plongés dans des bains d'acétone saturée de carboglace (− 78 °C). Après 30 minutes, 50 g de butadiène (0,93 mole), séché sur n-butyl-lithium et distillé juste avant l'emploi sont ajoutés goutte à goutte par capillaire en environ 15 minutes dans chaque ballon. 15 minutes plus tard, on introduit, au moyen d'un capillaire plongeant dans la solution, un excès de $CO_2$ gazeux. La solution se décolore tout en gélifiant. Après l'introduction de 1 ml d'une solution aqueuse concentrée de HCl, le polymère est précipité dans 5 litres de méthanol technique, filtré et séché sous vide.

Le tableau 2 indique les valeurs de x et y en fonction des masses moléculaires désirées. La fonctionnalité est toujours supérieure à 1,95

(voir Tableau p. 10)

Tableau 2

| Polymère | x (ml) | y (ml) | $\bar{M}n$ obtenu |
|---|---|---|---|
| A | 100 | 2,7 | 10000 |
| B | 83 | 2,3 | 12000 |
| C | 71 | 1,9 | 14000 |
| D | 56 | 1,5 | 18000 |

Les polybutadiènes α,ω-diacides carboxyliques, préparés comme ci-dessus, sont dissous dans le toluène à raison de 5 g dans 50 ml. On ajoute alors z ml de n-butanolate de titane (Fluka) et on agite vigoureusement le mélange au moyen d'une spatule comme dans l'exemple 1. Après quelques minutes, un gel homogène est obtenu pour les quatres polymères. Le temps d'agitation jusqu'à l'obtention d'un gel homogène est d'autant plus court que $\bar{M}n$ est élevé. Lorsque $\bar{M}n$ = 18 000, 1 minute suffit, alors que pour $\bar{M}n$ = 10 000, il faut agiter environ 3 minutes pour obtenir le gel définitif.

Le tableau suivant reprend les valeurs de z et le module d'équilibre à 25 °C des différents gels obtenus.

Tableau 3

| Polymère | $\bar{M}n$ | z (ml) moles | G éq. (dynes/cm$^2$) |
|---|---|---|---|
| A | 10000 | 0,43 : $1{,}25.10^{-3}$ | $2{,}3.10^5$ |
| B | 12000 | 0,36 : $1{,}04.10^{-3}$ | $1{,}7.10^5$ |
| C | 14000 | 0,31 : $0{,}89.10^{-3}$ | $2{,}3.10^5$ |
| D | 18000 | 0,24 : $0{,}69.10^{-3}$ | $1{,}9.10^5$ |

On peut donc constater que le module d'équilibre n'est pas significativement affecté par la masse moléculaire du polymère dans le domaine étudié. Compte tenu que plus élevée est la masse moléculaire, et moins il faut d'alcoolate de titane pour obtenir un gel, il apparaît qu'un polymère de masse moléculaire de l'ordre de 15 000-20 000 est économiquement bien adapté.

Exemple 17

Préparation de polyisobutylène α,ω-dicarboxylate de zirconium

10 g ($4{,}5 \cdot 10^{-3}$ moles) de polyisobutylène α,ω-diacide carboxylique de masse moléculaire moyenne en nombre ($\bar{M}n$) de 2 200 (CTPIB, EMO 590 de Exxon) sont dissous dans 50 ml de toluène. 4,1 g ($9 \cdot 10^{-3}$ moles) de n-propanolate de zirconium (Alfa) sont alors introduits et le mélange est agité vigoureusement au moyen d'une spatule en prenant soin d'incorporer de l'air humide. Après environ 5 minutes d'agitation, un gel homogène est obtenu.

Celui-ci possède des caractéristiques rhéologiques semblables aux gels décrits dans les exemples précédents.

Exemple 18

Préparation de polybutadiène α,ω-dicarboxylate de zirconium

10 g ($2{,}17 \cdot 10^{-3}$ moles) de polybutadiène α,ω-diacide carboxylique (Hycar CTB de Goodrich) sont dissous dans 100 ml d'une huile minérale. 2,4 g ($5{,}4 \cdot 10^{-3}$ moles) de n-propanolate de zirconium (Alfa) sont alors introduits et le mélange est agité vigoureusement au moyen d'une spatule durant environ 5 minutes. Sa viscosité augmente graduellement pour finalement conduire à un gel homogène.

Dans ce cas, le produit de la réaction de polybutadiène α,ω-diacide carboxylique et de n-propanolate de zirconium forme un épaississant de l'huile minérale.

Les caractéristiques rhéologiques du gel obtenu dans le présent exemple, évaluées par spectrométrie mécanique (« RHEOMETRICS RMS 7200 ») sont reprises au tableau 4 et plus spécialement les valeurs du module de conservation G′ et de tg δ à différentes températures, pour une déformation harmonique de 1 Hz. Pour ce gel, le rapport (Zr)/(PBD) = 2

Tableau 4

| Température (°C) | G' (1 Hz) (dynes/$cm^2$) | tg δ |
|---|---|---|
| 24 | $1,82.10^4$ | 0,63 |
| 43 | $1,38.10^4$ | 0,78 |
| 63 | $0,93.10^4$ | 0,93 |
| 86 | $0,69.10^4$ | 0,95 |

On peut remarquer que l'état de gel se maintient jusqu'à 86 °C, puisque tg δ reste plus petit que 1 (G′ > G″). Par ailleurs, le module de conservation se maintient à un niveau acceptable. L'énergie d'activation de l'écoulement de ce gel a été estimée à 5,9 Kcal/mole, ce qui signifie que la viscosité dynamique diminue d'un facteur 2 pour une augmentation de température de 23 °C, entre 0 et 100 °C. La viscosité dynamique de ce gel est, à 24 °C et à 1 rad/sec, égale à 750 Pa.s (7 500 poises). La viscosité de l'huile de départ est de 0,5 Pa.s (5 poises) seulement à 25 °C.

A titre de comparaison, deux systèmes semblables, mais contenant une quantité moindre de zirconium, ont été préparés :

Premier système : 0,6 g de n-propanolate de Zr (rapport (Zr)/(PBD) = 0,5)

Second système : 1,2 g de n-propanolate de Zr (rapport (Zr)/(PBD) = 1,0)

La viscosité d'écoulement de ces systèmes a de nouveau été évaluée par spectrométrie mécanique (« RHEOMETRICS RMS 7200 ») en travaillant entre cône et plateau en rotation constante.

Le mélange Huile + 10 % de PBD diacide a une viscosité de 750 ± 50 mPa.s (7,5 ± 0,5 poises) et est légèrement rhéofluidifiant.

Le premier système ((Zr)/(PBD) = 0,5) est Newtonien au moins jusque $\dot{\gamma} = 100\ sec^{-1}$ ; la viscosité dynamique est de 11,0 ± 0,3 Pa.s (110 ± 3 poises) à 1 rad/sec. Aucune force normale n'est decelée, le comportement étant essentiellement visqueux.

Le second système ((Zr/(PBD) = 1) est rhéoépaississant pour $\dot{\gamma} < 0,1\ sec^{-1}$, et une force normale est mesurée, traduisant une composante élastique. La viscosité dynamique à 1 rad/sec vaut 210 Pa.s (2 100 poises). Pour les vitesses de déformation réduites, ($\dot{\gamma} \simeq 0,1\ sec^{-1}$), le paramètre $\sigma_{12}$ (qui, divisé par le gradient de vitesse $\dot{\gamma}$, donne la viscosité η), est lié au gradient de vitesse par la relation

$$\sigma_{12} = 3,4 \cdot 10^4\, \dot{\gamma}^{1,2}$$

L'exposant supérieur à l'unité traduit un comportement rhéoépaississant.

La première différence de forces normales ($\sigma_{11} - \sigma_{22}$) est liée au gradient de vitesse par la relation suivante

$$\sigma_{11} - \sigma_{22} = 2,5 \cdot 10^5 \dot{\gamma}^2$$

Pour un rapport (Zr)/(PBD) = 1,5, la viscosité dynamique à 1 rad/sec = 700 Pa.s (7 000 poises).

En conclusion, en faisant varier uniquement le rapport Zirconium/PBD, on peut passer d'un milieu strictement visqueux ((Zr)/(PBD) = 0,5) à un milieu complètement gélifié ((Zr)/(PBD) = 1,5 et 2) en passant par les états intermédiaires ((Zr)/(PBD) = 1).

Exemple 19

Amélioration de la résistance à l'impact de chlorure de polyvinyle (PVC) par l'incorporation de PBD α,ω-dicarboxylate de Ti ou Zr

On prépare un mélange de PBD α,ω-dicarboxylate de Ti (ou de Zr) et de PVC comme suit.

12 g ($2,61 \cdot 10^{-3}$ moles) de PBD α,ω-diacide carboxylique (Hycar CTB de Goodrich, $\bar{M}n$ = 4 600) sont dissous dans 60 ml de benzène puis traités par 2,2 ml de de n-butanolate de titane ($6,5 \cdot 10^{-3}$ moles). Le tout est versé dans un mortier, puis mélangé à 30 g de PVC (Solvic de Solvay) stabilisé par 2 % d'octanoate

d'étain dibutyle. Après 5 minutes de mélange vigoureux, une poudre jaune est obtenue. On évapore le benzène sous pression réduite. Ce mélange est incorporé sur malaxeur à rouleaux (200 °C) à 120 g de PVC, contenant 1 % d'octanoate d'étain comme stabilisant. Après 10 minutes de malaxage, le mélange est moulé et soumis au test Charpy (DIN 53453-1958) de résistance à l'impact.

Les résultats des essais sont illustrés dans le tableau 5 suivant.

Tableau 5

| Formulation (%) | | | | Choc |
|---|---|---|---|---|
| PVC pur | PVC prémélangé au PBD PVC | PBD | M | (Kg cm/cm$^3$) |
| 100 | 0 | 0 | - | 7,7 |
| 88,5 | 4 | 7,5 | Ti | 9,3 |
| 85 | 7,5 | 7,5 | Ti | 20,2 |
| 74 | 18,5 | 7,5 | Ti | 13,9 |
| 61,5 | 31 | 7,5 | Ti | 11,2 |
| 88,5 | 4 | 7,5 | Zr | 13,9 |
| 85 | 7,5 | 7,5 | Zr | 18,1 |
| 74 | 18,5 | 7,5 | Zr | 16,8 |
| 61,5 | 31 | 7,5 | Zr | 12,7 |

Ce tableau révèle clairement l'amélioration remarquable de la résistance aux chocs obtenue en ajoutant, en quantité mineure, un prépolymère ou polymère α,ω-dicarboxylate d'un métal de transition à du PVC.

Exemple 20

Propriétés adhésives

Les gels, dont la préparation est décrite dans les exemples 1, 2, 11, 16 et 17, sont débarrassés de leur solvant, par évaporation sous vide de ce dernier. Ils peuvent également être préparés en l'absence de solvant comme décrit dans les exemples 21 et 22.

Les produits obtenus présentent les caractéristiques des adhésifs de type « Hot Melt ». Des plaques d'acier inoxydable sont collées sur une surface d'un pouce de large et de deux pouces de long et chauffées sous presse à 120 °C durant 3 minutes. Les surfaces encollées sont soumises à une contrainte de cisaillement imposée par une machine de traction « Instron » travaillant à la vitesse constante de 5 mm/minute (ASTM-D 1002-64). Les résultats, exprimés en kg/cm$^2$, sont indiqués dans le tableau 6 suivant :

Tableau 6

| Adhésif | Moyenne sur 3 essais |
|---|---|
| PIP 10 000 Ti (Ex. 2) | 21,6 |
| id. vieilli 40 jours | 24,0 |
| PIP 16 000 Ti (Ex. 2) | 14,4 |
| id. vieilli 40 jours | 20,0 |
| PBD 4600 Ti (Ex. 1) | 8,0 |
| Araldite (Ciba Geigy) | 11,4 |
| durcisseur 927576 réserve 927536 | |

Il apparaît donc que les performances des produits du type PIP-Ti sont très intéressantes. De plus, un vieillissement à température ordinaire améliore sensiblement l'adhésion. Ceci est dû à une rigidification au sein du PIP, essentiellement par réticulation au niveau des atomes de titane (réaction plus complète avec l'eau).

Exemple 21

Préparation de polybutadiène α,ω-dicarboxylate de zirconium en l'absence de solvant

A. Première variante

200 g ($4{,}34 \cdot 10^{-2}$ moles) de polybutadiène α,ω-diacide carboxylique de Mn = 4 600 (Hycar CTB de Goodrich) sont traités par 29 ml ($6{,}87 \cdot 10^{-2}$ moles) de n-propanolate de zirconium dans un mortier en porcelaine. Après un mélange vigoureux au moyen d'une spatule (15 minutes), un produit gommeux est obtenu. Il est ensuite travaillé durant 8 minutes à 150 °C sur un malaxeur à rouleaux. Un dégagement de n-propanol est décelé, tandis que le produit devient plus cohésif et moins collant.

B. Deuxième variante

200 g de polybutadiène α,ω-diacide carboxylique (Hycar CTB, Goodrich, $\bar{M}n$ = 4 600) sont traités par 29 ml de n-propanolate de zirconium dans un malaxeur interne thermostatisé à 100 °C (plastographe Brabender). Après 15 minutes de malaxage, la matière reste collante ; elle est dès lors retravaillée 6 minutes à 180 °C sur un malaxeur à rouleaux. Un produit semblable à celui récupéré par la première variante est à nouveau obtenu.

Les produits obtenus selon les exemples 21A et 21B ont été comparés au produit équivalent préparé dans le toluène (exemple 8) et récupéré après élimination sous vide du solvant.

Le tableau 7 suivant indique la valeur, exprimée en dynes/cm², du module de torsion mesuré à 25 °C pour différents temps de mesure.

Tableau 7

| Temps de mesure (sec) | Ex. 21A | Ex. 21B | Ex. 8 après élimination du toluène |
|---|---|---|---|
| 10 | $2{,}1.10^7$ | $2{,}5.10^7$ | $3{,}0.10^7$ |
| 100 | $1{,}0.10^7$ | $1{,}6.10^7$ | $1{,}6.10^7$ |
| 1000 | $0{,}3.10^7$ | $0{,}6.10^7$ | $0{,}55.10^7$ |

On remarque que la synthèse effectuée en l'absence de solvant et en prémélangeant au malaxeur interne (Ex. 21B) donne des résultats assez semblables à ceux d'une synthèse effectuée en solution dans le toluène.

Exemple 22

Préparation de polyisoprène α,ω-dicarboxylate de zirconium en l'absence de solvant

40 g ($7 \cdot 10^{-4}$ moles) de polyisoprène α,ω-diacide carboxylique de Mn = 57 000, préparé de manière analogue à celle décrite dans l'exemple 2, sont travaillés sur un malaxeur à rouleaux à une température de 130 °C · 0,3 ml ($1{,}07 \cdot 10^{-3}$ moles) de n-propanolate de zirconium sont alors ajoutés goutte à goutte. Après 8 minutes de malaxage, le polyisoprène α,ω-dicarboxylate de zirconium est récupéré.

**Revendications**

1. Procédé de préparation de produits contenant des chaînes polymères, dans lequel on fait réagir un prépolymère ou un polymère linéaire contenant au moins un groupement acide libre à chaque extrémité de chaîne avec un alcoolate d'un métal, caractérisé en ce qu'on utilise un alcoolate d'un métal polyvalent M ayant une valence supérieure à 2 en une quantité telle que les fonctions alcoolate soient en excès par rapport à la quantité stœchiométrique des fonctions acides portées par ledit prépolymère ou polymère et en ce qu'on agite le mélange réactionnel en présence d'humidité jusqu'à obtention d'un produit dans lequel les atomes d'hydrogène des groupements acides du prépolymère ou polymère sont substitués par un atome du métal M lui-même lié à un autre atome de ce métal par des liaisons M—O—M.

2. Procédé suivant la revendication 1, caractérisé en ce qu'on fait réagir le prépolymère ou polymère à groupements acides libres terminaux avec l'alcoolate du métal à valence supérieure à 2 en l'absence de tout solvant.

3. Procédé suivant la revendication 1, caractérisé en ce qu'on fait réagir le prépolymère ou polymère

à groupements acides libres terminaux dissous dans un solvant non polaire avec l'alcoolate du métal à valence supérieure à 2 et on élimine le solvant non polaire après la réaction.

4. Procédé suivant la revendication 1, caractérisé en ce qu'on fait réagir le prépolymère ou polymère à groupements acides libres terminaux dissous dans un solvant non polaire avec l'alcoolate du métal à valence supérieure à 2, de manière à obtenir un gel homogène du produit de réaction dans lequel les atomes d'hydrogène des groupements acides terminaux du prépolymère ou polymère sont substitués par un atome du métal lui-même lié à un autre atome de ce métal par des liaisons M—O—M.

5. Procédé suivant l'une quelconque des revendications précédentes, caractérisé en ce qu'on utilise l'alcoolate du métal à valence supérieure à 2 à l'état pur ou en solution dans un solvant polaire.

6. Procédé suivant l'une ou l'autre des revendications précédentes, caractérisé en ce qu'on utilise un prépolymère ou polymère choisi parmi les polymères polydiéniques, polyoléfiniques, polyvinyliques, polyoxydes d'alkylène, polyacryliques et polysiloxanne à groupements acides libres terminaux.

7. Procédé suivant la revendication 6, caractérisé en ce que les groupements acides libres terminaux sont choisis parmi les groupements carboxylique, sulfonique et phosphonique.

8. Procédé suivant la revendication 6, caractérisé en ce qu'on utilise un prépolymère ou polymère choisi parmi les polybutadiènes α,ω-diacides carboxyliques, les polyisoprènes α,ω-diacides carboxyliques, les poly α-méthylstyrènes α,ω-diacides carboxyliques, les poly tertiobutylstyrènes α,ω-diacides carboxyliques, les polystyrènes α,ω-diacides carboxyliques, les poly(oxydes d'éthylène) α,ω-diacides carboxyliques, les poly(oxydes de propylène) α,ω-diacides carboxyliques, les copolymères butadiène-acrylonitrile α,ω-diacides carboxyliques, les polyisobutylènes α,ω-diacides carboxyliques et les polyacrylates α,ω-diacides carboxyliques.

9. Procédé suivant l'une ou l'autre des revendications 1 à 8, caractérisé en ce qu'on utilise un alcoolate d'un métal à valence supérieure à 2 contenant un groupe alkyle contenant 1 à 6 atomes de carbone, de préférence 3 à 4 atomes de carbone.

10. Procédé suivant la revendication 9, caractérisé en ce qu'on utilise un alcoolate de titane.

11. Procédé suivant la revendication 9, caractérisé en ce qu'on utilise un alcoolate de zirconium.

12. Procédé suivant la revendication 9, caractérisé en ce qu'on utilise un alcoolate de cérium.

13. Procédé suivant l'une quelconque des revendications 1 à 12, caractérisé en ce qu'on utilise un excès d'alcoolate du métal polyvalent dans un rapport de 1 à 5 métaux par chaîne diacide.

14. Procédé suivant la revendication 10, caractérisé en ce qu'on utilise un excès d'alcoolate de titane de 2,5 atomes de titane par chaîne diacide de polymère.

15. Procédé suivant la revendication 11, caractérisé en ce qu'on utilise un excès d'alcoolate de zirconium de 1,75 atome de zirconium par chaîne diacide de polymère.

16. Procédé suivant l'une quelconque des revendications 3 et 4, caractérisé en ce qu'on utilise, comme solvant non polaire, un hydrocarbure aliphatique, alicyclique ou aromatique.

17. Procédé suivant la revendication 16, caractérisé en ce qu'on utilise un solvant non polaire dont la constante diélectrique est inférieure à environ 5.

18. Procédé suivant l'une quelconque des revendications 16 et 17, caractérisé en ce qu'on utilise un solvant non polaire choisi parmi le pentane, l'hexane, l'heptane, l'octane, le décahydronaphtalène, le benzène, le toluène, le tétrahydronaphtalène, l'essence pour véhicules automobiles, le pétrole et les huiles minérales.

19. Procédé suivant l'une quelconque des revendications 1 à 18, caractérisé en ce qu'on utilise une nappe d'eau comme source d'humidité.

20. Procédé suivant l'une quelconque des revendications 1 à 18, caractérisé en ce qu'on utilise l'humidité atmosphérique comme source d'humidité.

21. Procédé suivant l'une quelconque des revendications 1 à 18, caractérisé en ce qu'on utilise de l'alumine hydratée comme source d'humidité.

22. Procédé suivant l'une quelconque des revendications 4 à 21, caractérisé en ce qu'on prépare le gel sur une nappe de pétrole flottant sur une masse d'eau.

23. A titre de produits industriels nouveaux, les produits formés par ou contenant un prépolymère ou polymère linéaire contenant, à chaque extrémité de chaîne, au moins un groupement acide, dont l'atome d'hydrogène est substitué par un atome d'un métal M à valence supérieure à 2 lui-même lié à un autre atome de ce métal par des liaisons M—O—M.

24. Produits suivant la revendication 23, caractérisés en ce qu'ils se présentent sous forme d'un gel homogène dans un solvant non polaire.

25. Produits suivant l'une quelconque des revendications 23 et 24, caractérisés en ce que le groupement acide est choisi parmi les groupements carboxylique, sulfonique et phosphonique.

26. Produits suivant l'une quelconque des revendications 23 à 25, caractérisés en ce qu'ils sont choisis parmi les polybutadiènes α,ω-dicarboxylates, les polyisoprènes α,ω-dicarboxylates, les poly α-méthylstyrènes α,ω-dicarboxylates, les polystyrènes α,ω-dicarboxylates, les poly tertiobutylstyrènes α,ω-dicarboxylates, les poly(oxydes d'éthylène) α,ω-dicarboxylates, les poly(oxydes de propylène) α,ω-dicarboxylates, les copolymères butadiène-acrylonitrile α,ω-dicarboxylates, les polyisobutylènes α,ω-dicarboxylates et les polyacrylates α,ω-dicarboxylates des métaux ayant une valence supérieure à 2.

27. Produits suivant l'une quelconque des revendications 23 à 26, caractérisés en ce que le métal est du titane.

28. Produits suivant l'une quelconque des revendications 23 à 26, caractérisés en ce que le métal est du zirconium.

29. Produits suivant l'une quelconque des revendications 23 à 26, caractérisés en ce que le métal est du cérium.

30. Produits suivant l'une quelconque des revendications 23 à 29, caractérisés en ce qu'ils sont gélifiés dans un solvant non polaire.

31. Produits suivant la revendication 30, caractérisés en ce que le solvant non polaire est choisi parmi les hydrocarbures aliphatiques, alicycliques et aromatiques.

32. Produits suivant la revendication 31, caractérisés en ce que le solvant non polaire a une constante diélectrique inférieure à environ 5.

33. Produits suivant la revendication 31, caractérisés en ce que le solvant non polaire est choisi parmi le pentane, l'hexane, l'heptane, l'octane, le décahydronaphtalène, le benzène, le toluène, le tétrahydronaphtalène, l'essence pour véhicules automobiles, le pétrole et les huiles minérales.

34. Utilisation des produits suivant l'une quelconque des revendications 23 à 33 pour améliorer la résistance aux chocs de polymères, tels que le chlorure de polyvinyle.

35. Utilisation des produits suivant l'une quelconque des revendications 23 à 33 comme agents épaississants pour huiles et lubrifiants.

36. Utilisation des produits suivant l'une quelconque des revendications 23 à 33 dans des compositions adhésives.

**Claims**

1. Process for preparing products containing polymer chains, in which a linear prepolymer or polymer containing at least one free acid group at each chain end is reacted with an alkoxide of a metal, characterized in that an alkoxide of a polyvalent metal M having a valence of more than 2 is used in such quantity that the alkoxide functions are in excess with respect to the stoichiometric quantity of the acid functions carried by said prepolymer or polymer and the reaction mixture is stirred in the presence of humidity until a product is obtained, in which the hydrogen atoms of the acid groups of the prepolymer or polymer are substituted by an atom of the metal M which is itself linked to another atom of this metal by M—O—M linkages.

2. Process according to claim 1, characterized in that the prepolymer or polymer containing free acid end groups is reacted with the alkoxide of the metal having a valence of more than 2 in the absence of any solvent.

3. Process according to claim 1, characterized in that the prepolymer or polymer containing free acid end groups dissolved in a non-polar solvent is reacted with the alkoxide of the metal having a valence of more than 2 and the non-polar solvent is removed after the reaction.

4. Process according to claim 1, characterized in that the prepolymer of polymer containing free acid end groups dissolved in a non-polar solvent is reacted with the alkoxide of the metal having a valence of more than 2, so as to obtain a homogeneous gel of the reactive product, in which the hydrogen atoms of the end acid groups of the prepolymer or polymer are substituted by an atom of the metal which is itself linked to another atom of this metal by M—O—M linkages.

5. Process according to any one of the preceding claims, characterized in that the alkoxide of the metal having a valence of more than 2 is used in pure state or as a solution in a polar solvent.

6. Process according to one or other of the preceding claims, characterized in that a prepolymer or polymer selected among polydienes, polyolefins, polyvinyl polymers, polyalkylene oxides, polyacrylic polymers and polysiloxanes having free acid end groups is used.

7. Process according to claim 6, characterized in that the free acid end groups are selected among the carboxylic, sulfonic and phosphonic groups.

8. Process according to claim 6, characterized in that a prepolymer or polymer selected among the polybutadienes α,ω-carboxylic diacids, the polyisoprenes α,ω-carboxylic diacids, the poly-α-methylstyrenes α,ω-carboxylic diacids, the poly-tert.-butylstyrenes α,ω-carboxylic diacids, the polystyrenes α,ω-carboxylic diacids, the poly(ethylene oxides) α,ω-carboxylic diacids, the poly(propylene oxides) α,ω-carboxylic diacids, the butadieneacrylonitrile copolymers α,ω-carboxylic diacids, the polyisobutylenes α,ω-carboxylic diacids and the polyacrylates α,ω-carboxylic diacids is used.

9. Process according to one or other of the claims 1 to 8, characterized in that an alkoxide of a metal having a valence of more than 2, which contains an alkyl group containing 1 to 6 carbon atoms, preferably 3 to 4 carbon atoms, is used.

10. Process according to claim 9, characterized in that a titanium alkoxide is used.

11. Process according to claim 9, characterized in that a zirconium alkoxide is used.

12. Process according to claim 9, characterized in that a cerium alkoxide is used.

13. Process according to any one of claims 1 to 12, characterized in that an excess of the polyvalent metal alkoxide in a ratio of 1 to 5 metals per diacid chain is used.

14. Process according to claim 10, characterized in that an excess of titanium alkoxide of 2.5 atoms of titane per diacid chain of polymer is used.

15. Process according to claim 11, characterized in that an excess of zirconium alkoxide of 1.75 atoms of zirconium per diacid chain of polymer is used.

16. Process according to any one of claims 3 and 4, characterized in that an aliphatic, alicyclic or aromatic hydrocarbon is used as non-polar solvent.

17. Process according to claim 16, characterized in that a non-polar solvent having a dielectric constant of less than about 5 is used.

18. Process according to any one of claims 16 and 17, characterized in that a non-polar solvent selected among pentane, hexane, heptane, octane, decahydronaphthalene, benzene, toluene, tetrahydronaphthalene, gasoline for motor vehicles, petroleum and mineral oils is used.

19. Process according to any one of claims 1 to 18, characterized in that a water layer is used as humidity source.

20. Process according to any one of claims 1 to 18, characterized in that the atmospheric humidity is used as humidity source.

21. Process according to any one of claims 1 to 18, characterized in that hydrated alumina is used as humidity source.

22. Process according to any one of claims 4 to 21, characterized in that the gel is prepared on a petroleum layer floating on a water mass.

23. As new industrial products, the products formed by or containing a linear prepolymer or polymer containing, at each chain end, at least one acid group, the hydrogen atom of which is substituted by an atom of a metal M having a valence of more than 2 and which is itself linked to another atom of this metal by M—O—M linkages.

24. Products according to claim 23, characterized in that they are in the form of a homogeneous gel in a non-polar solvent.

25. Products according to any one of claims 23 and 24, characterized in that the acid group is selected among the carboxylic, sulfonic and phosphonic groups.

26. Products according to any one of claims 23 to 25, characterized in that they are selected among the polybutadienes α,ω-dicarboxylates, the polyisoprenes α,ω-dicarboxylates, the poly-α-methylstyrenes α,ω-dicarboxylates, the polystyrenes α,ω-dicarboxylates, the poly-tert.-butylstyrenes α,ω-dicarboxylates, the poly(ethylene oxides) α,ω-dicarboxylates, the poly(propylene oxides) α,ω-dicarboxylates, the butadieneacrylonitrile copolymers α,ω-dicarboxylates, the polyisobutylenes α,ω-dicarboxylates and the polyacrylates α,ω-dicarboxylates of metals having a valence of more than 2.

27. Products according to any one of claims 23 to 26, characterized in that the metal is titanium.

28. Products according to any one of claims 23 to 26, characterized in that the metal is zirconium.

29. Products according to any one of claims 23 to 26, characterized in that the metal is cerium.

30. Products according to any one of claims 23 to 29, characterized in that they are gelled in a non-polar solvent.

31. Products according to claim 30, characterized in that the non-polar solvent is selected among the aliphatic, alicyclic and aromatic hydrocarbons.

32. Products according to claim 31, characterized in that the non-polar solvent has a dielectric constant of less than about 5.

33. Products according to claim 31, characterized in that the non-polar solvent is selected among pentane, hexane, heptane, octane, decahydronaphthalene, benzene, toluene, tetrahydronaphthalene, gasoline for motor vehicles, petroleum and mineral oils.

34. Use of the products according to any one of claims 23 to 33 for improving the shock resistance of polymers, such as polyvinyl chloride.

35. Use of the products according to any one of claims 23 to 33 as thickening agents for oils and lubricants.

36. Use of the products according to any one of claims 23 to 33 in adhesive compositions.

**Ansprüche**

1. Verfahren zur Herstellung von Polymerketten enthaltenden Produkten, wobei man ein lineares Vorpolymerisat oder ein Polymerisat, welche wenigstens eine freie Säuregruppe an jedem Kettenende enthalten, mit einem Metallalkoholat zur Umsetzung bringt, dadurch gekennzeichnet, daß man ein Alkoholat eines polyvalenten Metalls M mit einer Wertigkeit von mehr als 2 in solcher Menge verwendet, daß die Alkoholatfunktionen im Überschuß, bezogen auf die stöchiometrische Menge der im Vorpolymerisat oder Polymerisat enthaltenen Säurefunktionen, vorhanden sind und daß man die Reaktionsmischung in Gegenwart von Feuchtigkeit bis zur Erzielung eines Produkts, in welchem die Wasserstoffatome der Säuregruppen des Vorpolymerisates oder Polymerisates durch ein Metallatom M substituiert sind, welches selbst wieder an ein weiteres Atom dieses Metalls durch Bindungen M—O—M gebunden ist.

2. Verfahren nach Anspruch 1, dadurch gekennzeichnet, daß man das Vorpolymerisat oder Polymerisat mit terminalen freien Säuregruppen mit dem Alkoholat des Metalls einer Wertigkeit von mehr als 2 in Abwesenheit jeglichen Lösungsmittels zur Umsetzung bringt.

3. Verfahren nach Anspruch 1, dadurch gekennzeichnet, daß man das Vorpolymerisat oder

Polymerisat mit terminalen freien Säuregruppen, gelöst in einem apolaren Lösungsmittel, mit dem Alkoholat des Metalls einer Wertigkeit von mehr als 2 zur Umsetzung bringt und das apolare Lösungsmittel nach der Reaktion entfernt.

4. Verfahren nach Anspruch 1, dadurch gekennzeichnet, daß man das Vorpolymerisat oder Polymerisat mit terminalen freien Säuregruppen, gelöst in einem apolaren Lösungsmittel, auf solche Weise mit dem Alkoholat des Metalls einer Wertigkeit von mehr als 2 zur Umsetzung bringt, daß ein homogenes Gel des Reaktionsprodukts erhalten wird, in welchem die Wasserstoffatome der terminalen Säuregruppen des Vorpolymerisates oder polymerisates durch ein Metallatom substituiert sind, welches selbst an ein weiteres Atom dieses Metalls durch Bindungen M—O—M gebunden ist.

5. Verfahren nach einem der vorhergehenden Ansprüche, dadurch gekennzeichnet, daß man das Alkoholat des Metalls mit einer Wertigkeit von mehr als 2 in reinem Zustand oder gelöst in einem polaren Lösungsmittel verwendet.

6. Verfahren nach dem einen oder anderen der vorhergehenden Ansprüche, dadurch gekennzeichnet, daß man ein Vorpolymerisat oder Polymerisat, ausgewählt unter den Polydien-, Polyolefin-, Polyvinyl-, Polyalkylenoxid-, Polyacryl- und Polysiloxanpolymerisaten mit terminalen freien Säuregruppen, verwendet.

7. Verfahren nach Anspruch 6, dadurch gekennzeichnet, daß die terminalen freien Säuregruppen ausgewählt sind aus den Carbonsäure-, Sulfonsäure- und Phosphonsäuregruppierungen.

8. Verfahren nach Anspruch 6, dadurch gekennzeichnet, daß man ein Vorpolymerisat oder Polymerisat, ausgewählt aus Polybutadien-α,ω-dicarbonsäuren, Polyisopren-α,ω-dicarbonsäure, Poly-α-methylstyrol-α,ω-dicarbonsäuren, Poly-tert. butylstyrol-α,ω-dicarbonsäuren, Polystyrol-α,ω-dicarbonsäuren, Poly-(äthylenoxid)-α,ω-dicarbonsäuren, Poly-(propylenoxid)-α,ω-dicarbonsäuren, Butadien-Acrylnitrilcopolymerisat-α,ω-dicarbonsäuren, Polyisobutylen-α,ω-dicarbonsäuren und Polyacrylat-α,ω-dicarbonsäuren, verwendet.

9. Verfahren nach dem einen oder anderen der Ansprüche 1 bis 8, dadurch gekennzeichnet, daß man ein Alkoholat eines Metalls mit einer Wertigkeit von mehr als 2, enthaltend eine Alkylgruppe mit 1 bis 6 Kohlenstoffatomen, vorzugsweise 3 bis 4 Kohlenstoffatomen, verwendet.

10. Verfahren nach Anspruch 9, dadurch gekennzeichnet, daß man ein Titanalkoholat verwendet.

11. Verfahren nach Anspruch 9, dadurch gekennzeichnet, daß man ein Zirkonalkoholat verwendet.

12. Verfahren nach Anspruch 9, dadurch gekennzeichnet, daß man ein Ceralkoholat verwendet.

13. Verfahren nach einem der Ansprüche 1 bis 12, dadurch gekennzeichnet, daß man einen Überschuß des Alkoholates des polyvalenten Metalls in einem Verhältnis von 1 bis 5 Metallatomen pro Disäurekette verwendet.

14. Verfahren nach Anspruch 10, dadurch gekennzeichnet, daß man einen Überschuß an Titanalkoholat von 2,5 Titanatomen pro Disäurekette des Polymerisates verwendet.

15. Verfahren nach Anspruch 11, dadurch gekennzeichnet daß man einen Überschuß an Zirkonalkoholat von 1,75 Zirkonatomen pro Disäurekette des Polymerisates verwendet.

16. Verfahren nach einem der Ansprüche 3 und 4, dadurch gekennzeichnet, daß man als apolares Lösungsmittel einen aliphatischen, alicyclischen oder aromatischen Kohlenwasserstoff verwendet.

17. Verfahren nach Anspruch 16, dadurch gekennzeichnet, daß man ein apolares Lösungsmittel, dessen Dielektrizitätskonstante unter etwa 5 liegt, verwendet.

18. Verfahren nach einem der Ansprüche 16 und 17, dadurch gekennzeichnet, daß man ein apolares Lösungsmittel, ausgewählt aus Pentan, Hexan, Heptan, Oktan, Decahydronaphthalin, Benzol, Toluol, Tetrahydronaphthalin, Motorenbenzin, Petroleum und Mineralölen, verwendet.

19. Verfahren nach einem der Ansprüche 1 bis 18, dadurch gekennzeichnet, daß man als Feuchtigkeitsquelle eine Wasserfläche verwendet.

20. Verfahren nach einem der Ansprüche 1 bis 18, dadurch gekennzeichnet, daß man als Feuchtigkeitsquelle atmosphärische Feuchtigkeit verwendet.

21. verfahren nach einem der Ansprüche 1 bis 18, dadurch gekennzeichnet, daß man als Feuchtigkeitsquelle hydratisierte Tonerde verwendet.

22. Verfahren nach einem der Ansprüche 4 bis 21, dadurch gekennzeichnet, daß man das Gel über einer auf einer Wassermasse schwimmenden Petroleumschicht bereitet.

23. Neue Industrieprodukte, die aus einem linearen Vorpolymerisat oder Polymerisat, welche an jedem Kettenende wenigstens eine Säuregruppierung enthalten, deren Wasserstoffatom durch ein Metallatom M einer Wertigkeit von mehr als 2 substituiert ist, welches selbst an ein weiteres Atom dieses Metalls durch Bindungen M—O—M gebunden ist, gebildet sind oder ein solches enthalten.

24. Produkte nach Anspruch 23, dadurch gekennzeichnet, daß sie in Form eines homogenen Gels in einem apolaren Lösungsmittel vorliegen.

25. Produkte nach einem der Ansprüche 23 und 24, dadurch gekennzeichnet, daß die Säuregruppierung ausgewählt ist aus Carbonsäure-, Sulfonsäure- und Phosphonsäuregruppierungen.

26. Produkte nach einem der Ansprüche 23 bis 25, dadurch gekennzeichnet, daß sie ausgewählt sind aus Polybutadien-α,ω-dicarboxylaten, Polyisopren-λ,ω-dicarboxylaten, Poly-α-methylstyrol-α,ω-dicarboxylaten, Polystyrol-α,ω-dicarboxylaten, Poly-tert.butylstyrol-λ,ω-dicarboxylaten, Poly-(äthylenoxid)-α,ω-dicarboxylaten, Poly-(propylenoxid)-α,ω-dicarboxylaten, Butadien-Acrylnitrilcopolymerisat-α,ω-dicarboxylaten, Polyisobutylen-α,ω-dicarboxylaten und Polyacrylat-α,ω-dicarboxylaten von Metallen mit einer Wertigkeit von mehr als 2.

27. Produkte nach einem der Ansprüche 23 bis 26, dadurch gekennzeichnet, daß das Metall Titan ist.

28. Produkte nach einem der Ansprüche 23 bis 26, dadurch gekennzeichnet, daß das Metall Zirkon ist.

29. Produkte nach einem der Ansprüche 23 bis 26, dadurch gekennzeichnet, daß das Metall Cer ist.

30. Produkte nach einem der Ansprüche 23 bis 29, dadurch gekennzeichnet, daß sie in einem apolaren Lösungsmittel geliert sind.

31. Produkte nach Anspruch 30, dadurch gekennzeichnet, daß das apolare Lösungsmittel ausgewählt ist aus aliphatischen, alicyclischen und aromatischen Kohlenwasserstoffen.

32. Produkte nach Anspruch 31, dadurch gekennzeichnet, daß das apolare Lösungsmittel eine Dielektrizitätskonstante von weniger als etwa 5 aufweist.

33. Produkte nach Anspruch 31, dadurch gekennzeichnet, daß das apolare Lösungsmittel ausgewählt ist aus Pentan, Hexan, Heptan, Oktan, Decahydronaphthalin, Benzol, Toluol, Tetrahydronaphthalin, Motorenbenzin, Petroleum und Mineralölen.

34. Verwendung der Produkte nach einem der Ansprüche 23 bis 33 zum Verbessern der Schlagfestigkeit von Polymerisaten, wie Polyvinylchlorid.

35. Verwendung der Produkte nach einem der Ansprüche 23 bis 33 als Verdickungsmittel für Öle und Schmiermittel.

36. Verwendung der Produkte nach einem der Ansprüche 23 bis 33 in Klebstoffzusammensetzungen.

FIG.1

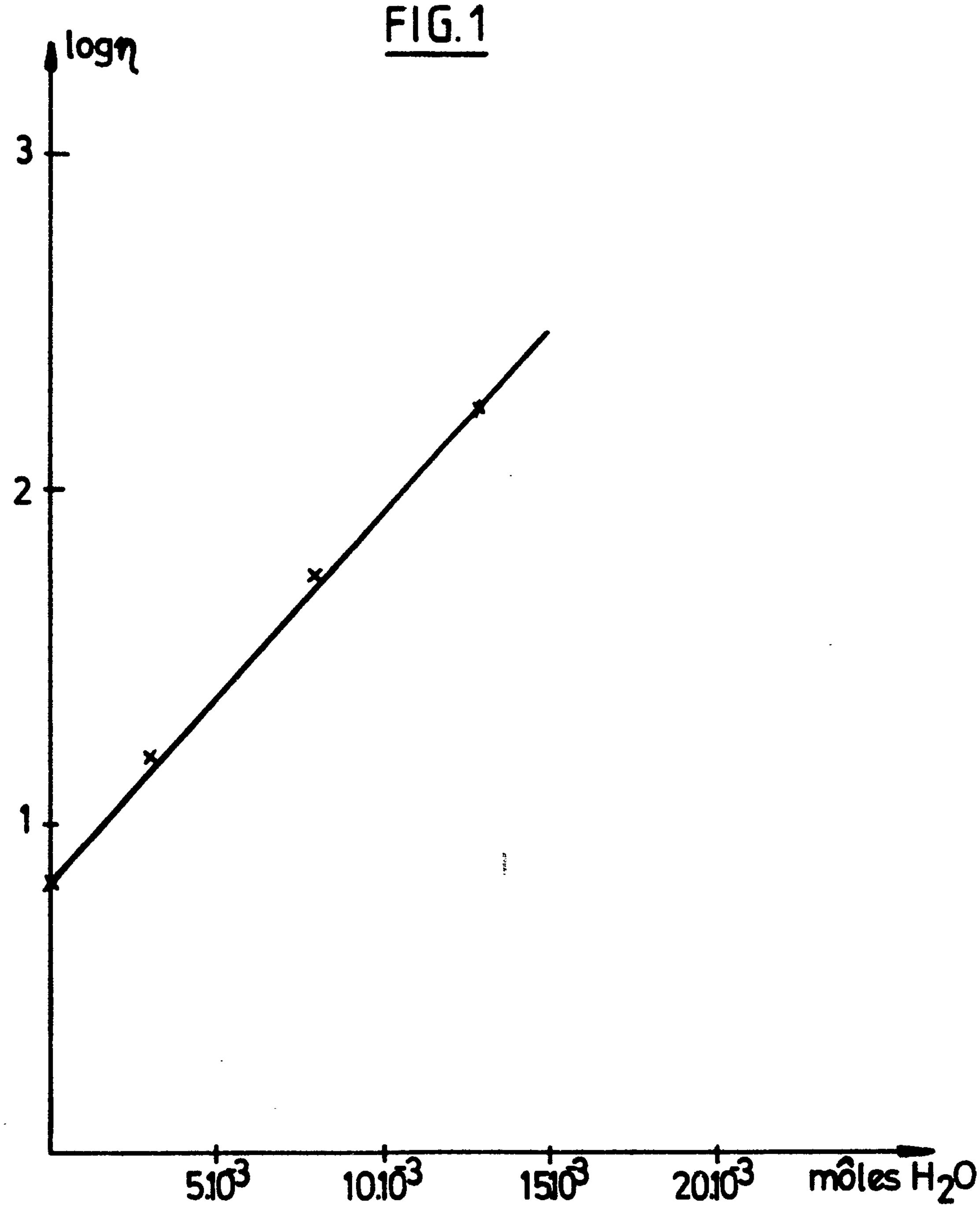

FIG. 2

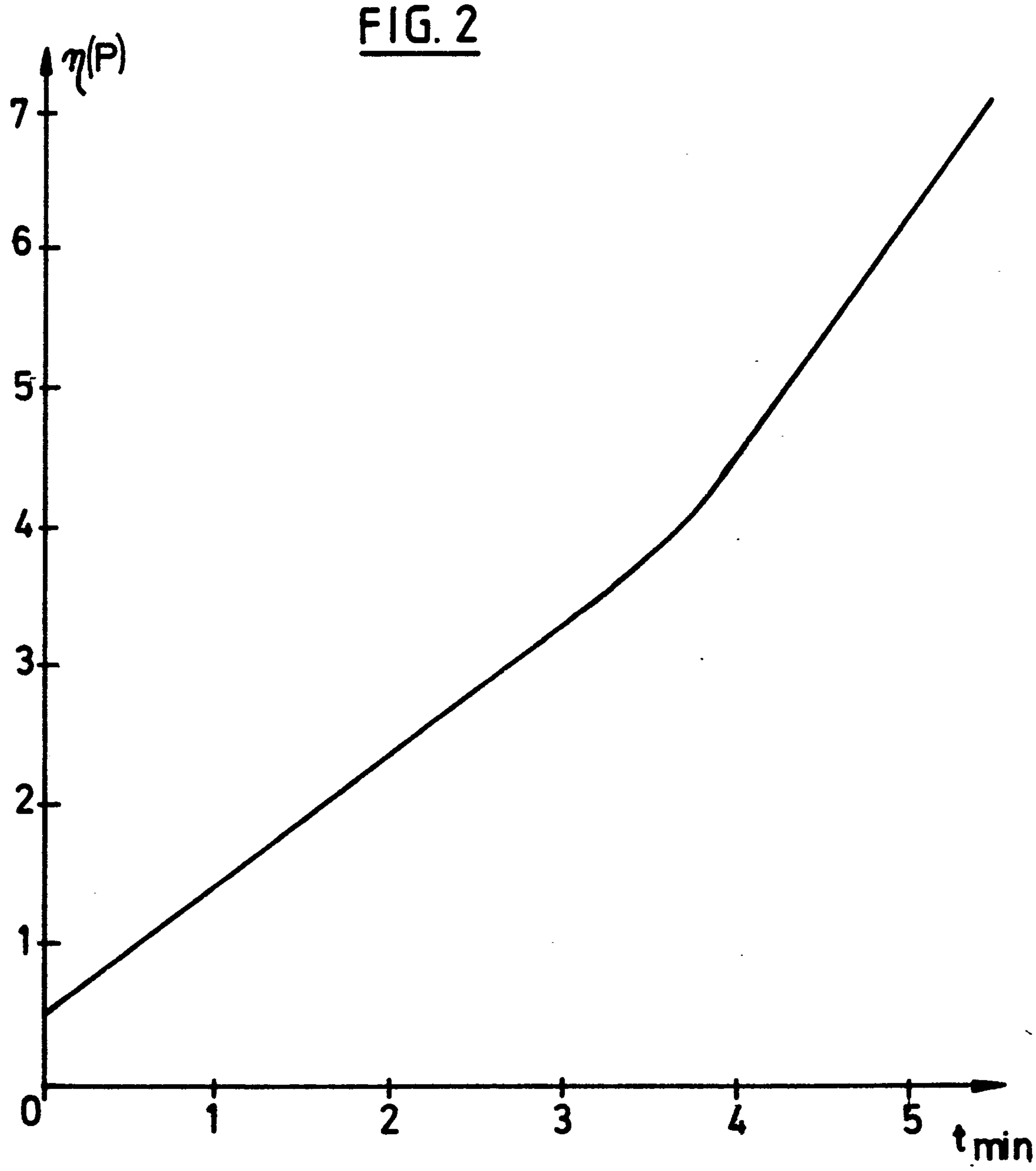

FIG. 3

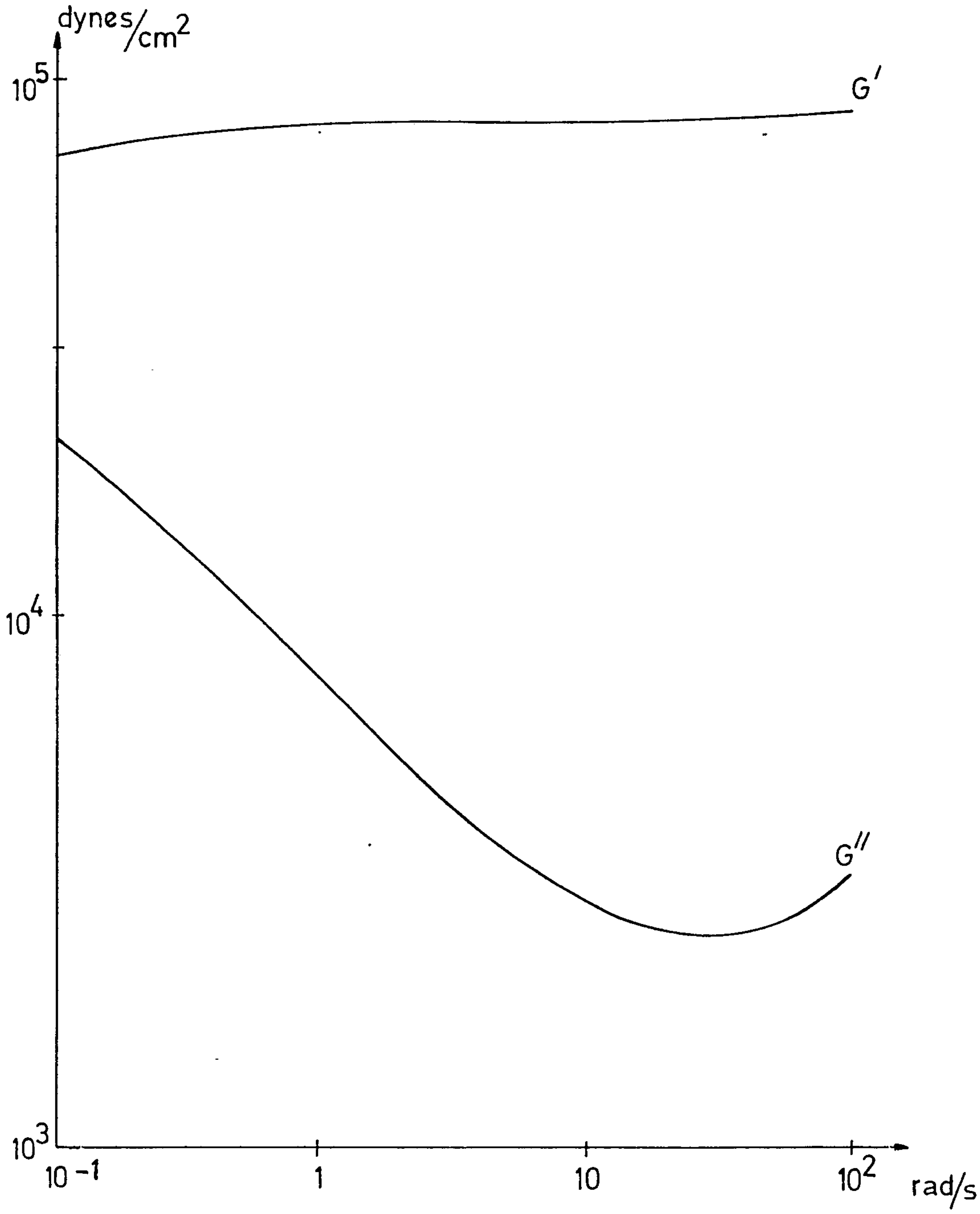

FIG. 4